Europäisches Patentamt

European Patent Office

Office européen des brevets

(11) Veröffentlichungsnummer: **0 292 668**
**A1**

## EUROPÄISCHE PATENTANMELDUNG

(21) Anmeldenummer: 88104818.5

(51) Int. Cl.⁴: **F16B 2/04**

(22) Anmeldetag: 25.03.88

(30) Priorität: 11.04.87 DE 3712321

(43) Veröffentlichungstag der Anmeldung:
30.11.88 Patentblatt 88/48

(84) Benannte Vertragsstaaten:
AT BE CH DE ES FR GB GR IT LI LU NL SE

(71) Anmelder: VEREINIGTE ALUMINIUM-WERKE
AKTIENGESELLSCHAFT
Berlin - Bonn Postfach 2468
Georg-von-Boeselager-Strasse 25
D-5300 Bonn 1(DE)

(72) Erfinder: Henseler, Peter
Alberichstrasse 55
D-5300 Bonn 2(DE)
Erfinder: Plath, Hans-Heinrich, Dipl.-Ing.
Rosenthalstrasse 6
D-5216 Niederkassel-Mondorf(DE)

(74) Vertreter: Müller-Wolff, Thomas, Dipl.-Ing.
c/o Vereinigte Aluminium-Werke AG
Patentabteilung Postfach 2468
D-5300 Bonn 1(DE)

(54) Vorrichtung zum Verbinden von Aluminium-Leichtbauteilen.

Die erfindungsgemäße Verbindungsvorrichtung, welche die Nachteile eines punktförmigen Lastangriffs vermeidet, wobei dies durch weniger Einzelteile und eine einfachere Montage ohne spanende Bearbeitung erreicht wird, besteht aus zwei hakenförmigen Koppelelementen, die in eine T-förmige Nut eingreifen, wobei die Koppelelemente (3, 4) als langgestreckte Strangpreßprofile ausgebildet sind, die einzeln in die T-Nut (2) einschwenken und an den freiliegenden Enden form- und/oder kraftschlüssige Sicherungselemente (5) gegen Herausschwenken aus der Nut (2) aufweisen. Die Erfindung kann auf alle Leichtbauteile angewendet werden, bei denen mindestens eins der zu verbindenden Bauteile eine T-förmige Nut aufweist.

EP 0 292 668 A1

## Vorrichtung zum Verbinden von Aluminium-Leichtbauteilen

(57) Die Erfindung betrifft eine Vorrichtung zum Verbinden von Aluminium-Leichtbauteilen, bei denen mindestens eins eine T-förmige Nut aufweist, bestehend aus zwei hakenförmigen Koppelelementen, die in die Nut eingreifen.

Das Prinzip, eine an einem Bauelement befindliche, beidseitig hinterschnittene Nut und darin eingeführte Koppelelemente zur Verbindung mehrerer Bauteile zu nutzen, ist aus DE 26 07 472 bekannt. Als Koppelelemente dienen in der Regel Nutensteine mit Innengewinde oder Verbindungsbolzen mit Verankerungsköpfen. Von Nachteil ist hierbei, daß die Krafteinleitung in die Nut quasi punktförmig erfolgt, die Wanddicken in diesem Bereich daher entsprechend stark ausgebildet werden müssen und somit ein optimaler Leichtbau nicht erzielt werden kann. Zum Teil ist auch ein örtliches Bearbeiten (Ausfräsen) der Nut erforderlich, um die Koppelemente einführen zu können.

DE 22 39 370 und EP 80 556 beschreiben Klemmverschlüsse mit hakenförmigen Klemmköpfen, die in entsprechende Nuten oder Öffnungen der zu verbindenden Bauteile eingreifen und dort durch einem Exzenter oder eine Stellschraube verspreizt werden können. Diese Konstruktion ist jedoch sehr aufwendig, da die Klemmverschlüsse aus sehr vielen Einzelteilen bestehen.

Die Aufgabe der vorliegenden Erfindung bestand darin, eine Verbindungsvorrichtung zu - schaffen, bei der ein punktförmiger Lastangriff und die daraus resultierenden Nachteile vermieden werden, die aus vergleichsweise wenig Einzelteilen besteht und daher einfach zu montieren ist. Eine besondere Aufgabe besteht darin, einen Verbund ohne spanende Bearbeitung und mit möglichst wenig zusätzlichen Befestigungselementen, wie Schrauben, Nuten o.ä., zu schaffen.

Die Lösung dieser Aufgabe erfolgt durch eine Vorrichtung mit den Merkmalen des Anspruchs 1.

Dadurch, daß die zu der erfindungsgemäßen Vorrichtung gehörenden Koppelelemente in Längsrichtung der T-Nut unterschiedlich lang ausgebildet werden können, wird eine im Gegensatz zu einem punktförmigen Lastangriff weitaus gleichmäßigere Kraftverteilung ermöglicht. Demzufolge können die Wanddicken im Bereich der Nut entsprechend gering ausfallen, und es wird ein optimaler Leichtbaugrad erzielt.

Befindet sich die Nut an einem plattenförmigen Bauteil, empfiehlt es sich, diese nach innen in die Plattenhöhe hinein zu verlegen, um eine glatte Unterseite zu erzielen.

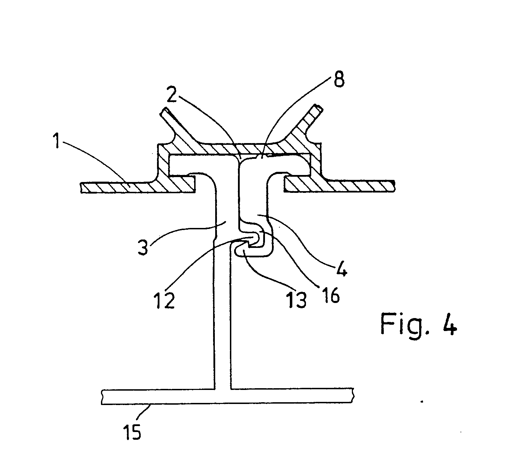

Die Montage der zu verbindenden Bauteile erfolgt auf einfache Weise, indem die Koppelemente in die Nut eingehängt bzw. eingeschwenkt und anschließend durch spezielle Sicherungselemente fixiert werden. Falls als Sicherungselemente Schrauben verwendet werden, können weitere Bauteile direkt an ihnen befestigt werden. Damit würden die Schrauben gleichzeitig Sicherungs- und Haltefunktion übernehmen. Weiterhin kann mindestens eins der Koppelelemente in eins der zu verbindenden Bauteile integriert sein (s. Fig. 4).

Hervorzuheben ist, daß sich die vorliegende Erfindung besonders dann eignet, wenn viele Einzelteile, wie plattenförmige Bauteile, Koppel- oder auch Sicherungselemente, in Aluminium-Strangpreßbauweise hergestellt worden sind. An einem Paar Koppelelemente können dann mehrere Bauteile auch ohne Umformung oder spanende Bearbeitung angeschlossen sein, z.B. durch Steck-, Einhänge- oder Schnappverbindungen.

Vorteilhafte Ausgestaltungen der Erfindung werden im folgenden anhand von Zeichnungen näher erläutert. Dabei ist dargestellt in

Fig. 1 eine Verbindung mit Sicherung der Koppelelemente durch Verschraubung

Fig. 2 eine Verbindung mit gleichzeitiger Befestigung eines weiteren Bauteils durch Verschraubung

Fig. 3 ein Paar Koppelelemente, an denen mehrere Bauteile befestigt sind

Fig. 4 eine Verbindung mit Sicherungselementen, die in die Koppelelemente integriert sind, wobei eines der Koppelelemente in eines der Bauteile integriert ist

Fig. 5 eine Verbindung, bei der die Koppelemente durch Verzahnung mit einem Sicherungselement verbunden sind

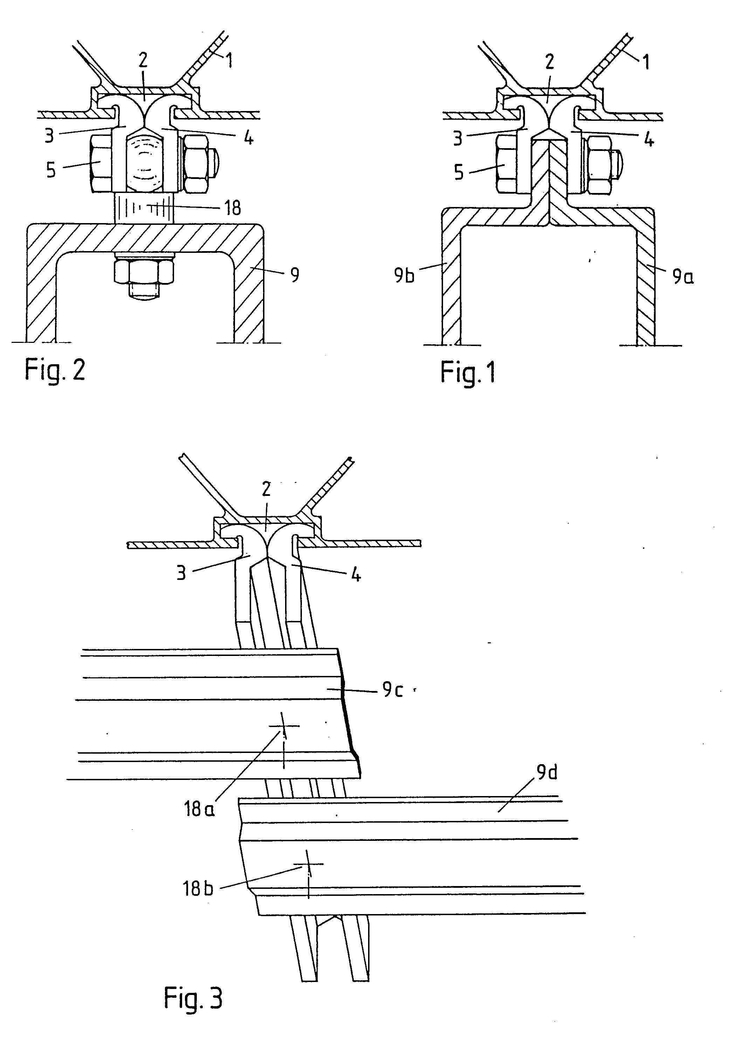

Bei dem in Fig. 1 gezeigten Beispiel greifen die Koppelelemente 3, 4 in die T-Nut 2 eines plattenförmigen Bauteils 1 ein und füllen diese im wesentlichen ganz aus. Als Sicherung der Koppelemente 3, 4 dient eine Verschraubung 5, an der gleichzeitig ein oder mehrere Bauteile 9a, 9b befestigt werden können.

Wie in Fig. 2 dargestellt, ist es auch möglich, das Sicherungselement 5 mittels einer Verschraubung 18 zur Befestigung eines weiteren Bauteils 9 zu nutzen. Die Koppelelemente 3, 4 übernehmen in diesem Beispiel beide zu gleichen Teilen tragende Funktion.

Fig. 3 zeigt, daß mehrere Bauteile 9c, 9d an einem Paar Koppelelementen 3, 4, z.B. durch Schrauben angeschlossen werden können.

Fig. 4 zeigt eine Vorrichtung, bei der die Sicherung der Koppelelemente 3, 4 durch einen Schnappverschluß erfolgt. Die Einschnappnasen 12, 13 sind in die Koppelelemente 3, 4 integriert, d.h., es werden keine gesonderten Sicherungselemente benötigt. Das zweite Koppelelement 4 weist an den Kontaktstellen mit dem ersten Koppelelement 3 und dem plattenförmigen Bauteil 1 Wülste 8 auf, die relativ zur T-Nut 2 Übermaß haben und beim Zusammenfügen teilweise verquetscht werden können. Dadurch wird ein besonders fester Sitz der Koppelelemente in der Nut gewährleistet. Mit 16 ist eine Hinterschneidung bezeichnet, in die hinein ein hakenförmiger Fortsatz 12 des Koppelelements 3 eingreift und dort verklammert ist. Das Koppelelement 3 ist in eines der zu verbindenden Bauteile 15 integriert.

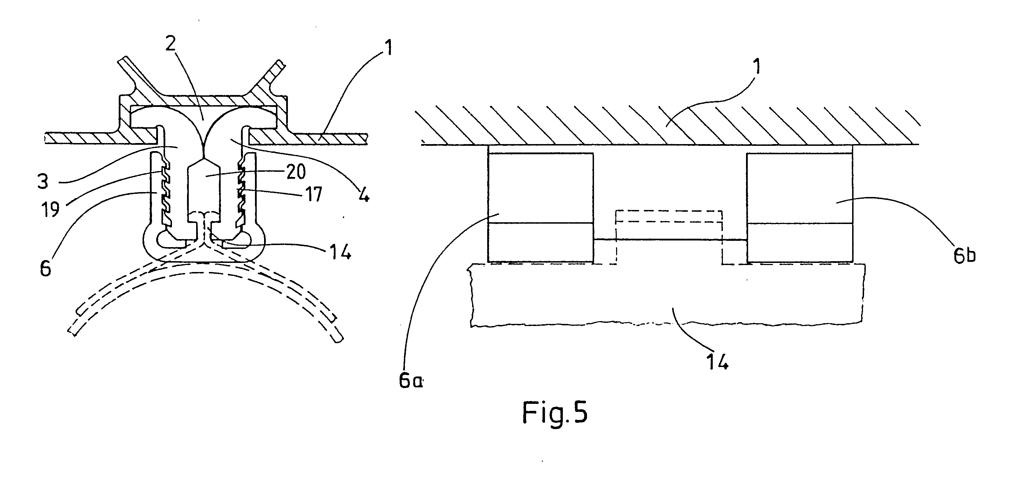

Das Beispiel in Fig. 5 beinhaltet U-förmige Sicherungselemente 6a, 6b, welche über eine innenliegende Verzahnung 19 mit den Koppelelementen 3, 4 verklammert sind, die ihrerseits eine Außenverzahnung 17 tragen. In diesem Fall können auch die Sicherungselemente 6a, 6b als Aluminium-Strangpreßprofile ausgebildet werden, so daß ein Verbund ohne spanende Verarbeitung entsteht. In den Hohlraum 20 greift das zu befestigende Teil 14 ein.

## Ansprüche

1. Vorrichtung zum Verbinden von Aluminium-Leichtbauteilen, bei denen mindestens eins eine T-förmige Nut aufweist, bestehend aus zwei hakenförmigen Koppelelementen, die in die Nut eingreifen, dadurch gekennzeichnet, daß die Koppelelemente (3, 4) als langgestreckte Strangpressprofile ausgebildet sind, die einzeln in die T-Nut (2) einschwenkbar sind und an den freiliegenden Enden der Koppelelemente form- und/oder kraftschlüssige Sicherungselemente (5) gegen Herausschwenken aus der Nut (2) angebracht sind.

2. Vorrichtung nach Anspruch 1, dadurch gekennzeichnet, daß als Sicherungselemente (5) Schrauben verwendet werden.

3. Vorrichtung nach einem der vorhergehenden Ansprüche, dadurch gekennzeichnet, daß die Koppelelemente (3, 4) die T-förmige Nut (2) im wesentlichen ganz ausfüllen und mindestens ein Koppelelement Wülste (8) aufweist, die relativ zur T-Nut (2) Übermaße haben und die nach dem Einschwenken in die Nut plastisch deformiert sind.

4. Vorrichtung nach einem der vorhergehenden Ansprüche, dadurch gekennzeichnet, daß zwischen T-Nut (2) und eingreifenden Koppelelementen (3, 4) ein Preßsitz ausgebildet ist.

5. Vorrichtung nach einem der vorhergehenden Ansprüche, dadurch gekennzeichnet, daß das eine Koppelelement (4) eine zur gemeinsamen Anlagefläche mit dem zweiten Koppelelement (3) hin geöffnete Hinterschneidung (16) aufweist, in die hinein ein hakenförmiger Fortsatz (12) des Koppelelements (3) eingreift und dort verklammert ist.

6. Vorrichtung nach einem der vorhergehenden Ansprüche, dadurch gekennzeichnet, daß die Koppelelemente (3, 4) an den Außenseiten je eine Riffelung bzw. Verzahnung (17) aufweisen, über die eine U-förmige Klammer (6) mit Innenverzahnung (19) geschoben ist.

7. Vorrichtung nach einem der vorhergehenden Ansprüche, dadurch gekennzeichnet, daß die Koppelelemente (3, 4) einen gemeinsamen Hohlraum (20) bilden, in die hinein das zu befestigende Teil (14) formschlüssig eingreift.

Fig. 2

Fig. 1

Fig. 3

Fig. 4

Fig. 5

0 292 668

## EINSCHLÄGIGE DOKUMENTE

EP 88104818.5

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | DE - A1 - 3 028 890 (HALFENEISEN)<br>* Anspruch 1; Fig. 1 * | 1,2 | F 16 B 2/04 |
| A | | 3,4 | |
| | -- | | |
| X | FR - A1 - 2 528 921 (MAILLET EXPOSITIONS)<br>* Anspruch 1; Fig. 2 * | 1,2,5 | |
| | -- | | |
| A | GB - A - 1 594 928 (WORRALLO)<br>* Fig. 3 * | 1,2 | |
| | ---- | | |

RECHERCHIERTE SACHGEBIETE (Int. Cl. 4)

F 16 B

Der vorliegende Recherchenbericht wurde für alle Patentansprüche erstellt.

| Recherchenort | Abschlußdatum der Recherche | Prüfer |
|---|---|---|
| WIEN | 09-09-1988 | REININGER |